(19) Europäisches Patentamt
European Patent Office
Office européen des brevets

(11) EP 2 316 605 A1

(12) EUROPEAN PATENT APPLICATION

(43) Date of publication:
04.05.2011 Bulletin 2011/18

(51) Int Cl.:
B23K 26/00 (2006.01)   B23K 26/40 (2006.01)

(21) Application number: 10189249.5

(22) Date of filing: 28.10.2010

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 29.10.2009 JP 2009248776

(71) Applicant: Mitsuboshi Diamond Industrial Co., Ltd.
Suita-city,
Osaka 564-0044 (JP)

(72) Inventors:
• Nagatomo, Shohei
  Suita Osaka 564-0044 (JP)
• Sugata, Mitsuru
  Suita Osaka 564-0044 (JP)
• Nakatani, Ikuyoshi
  Suita Osaka 564-0044 (JP)

(74) Representative: TBK-Patent
Bavariaring 4-6
80336 München (DE)

Remarks:
Claims filed after the date of filing of the application (Rule 68(4) EPC).

(54) **Laser processing method, method for dividing workpiece, and laser processing apparatus**

(57)    A laser processing method for performing laser processing for reducing light absorption on a processing trail (M1,M2) is provided. When an irradiated range on a surface of a workpiece is modulated by modulating an irradiating state of a pulse laser beam (LB) from a light source, a processed region (RE) which has a continuous portion (RE1) in a first direction and in which a state of a cross section vertical to the first direction changes in the first direction is formed. Concretely, scanning by means of the pulse laser beam is performed under an irradiating condition that beam spots of the laser beam per unit pulse are discrete along the first direction, or scanning by means of the pulse laser beam in the first direction is performed while the irradiation energy of the pulse laser beam is being modulate, or scanning by means of the pulse laser beam in a second direction and a third direction that have predetermined angles with respect to the first direction are alternatively repeated. As a result, a scanning trajectory of the pulse laser beam on the workpiece is allowed to cross the division planned line along the first direction repeatedly and alternatively so that the processed region can be realized.

FIG. 3

**Description**

BACKGROUND OF THE INVENTION

Field of the Invention

The present invention relates to a laser processing method for emitting a laser beam and processing workpieces.

Description of the Background Art

Various techniques that emit pulse laser beams and process workpieces (hereinafter, simply laser processing or laser processing techniques) have been already publicly known (for example, see Japanese Patent Application Laid-Open No. 2004-9139, International Publication No. 2006/062017, Japanese Patent Application Laid-Open Nos. 2007-83309 and 2008-98465).

Japanese Patent Application Laid-Open No. 2004-9139 discloses a method for dividing a die as a workpiece by forming a groove (break groove) having a V-shaped cross section along a division planned line by means of a laser ablation and dividing the die with the groove being used as a starting point. On the other hand, International Publication No. 2006/062017 discloses a method of emitting a laser beam in a defocused state along a division planned line of a workpiece (an object to be divided) to generate a melting alteration region (an affected region) having an approximately V-shaped cross section whose crystalline state is inferior to its surrounding on an irradiated area and dividing a workpiece with a lowermost point of the melting alteration region being used as a starting point.

In both the cases where the division starting point is formed by using the techniques disclosed in Japanese Patent Application Laid-Open No. 2004-9139 and International Publication No. 2006/062017, it is important to form a V-shaped cross section having uniform shape (a groove cross section or an affected region cross section) along a direction of the division planned line as a scanning direction of a laser beam in order to satisfactorily carry out division thereafter. In cope with this situation, for example, the emission of a laser beam is controlled so that areas to be irradiated with a laser beam for each pulse (beam spots) are overlapped with each other forward and backward.

For example, when a repetition frequency (unit: kHz) is determined as R and a scanning speed (unit: mm/sec) is determined as V, which are a most basic parameter of the laser processing, their ratio V/R equates an interval of beam spot centers. In the techniques disclosed in Japanese Patent Application Laid-Open No. 2004-9139 and International Publication No. 2006/062017, the laser beam is emitted and scanning is performed under a condition that V/R is 1 $\mu$m or less so that the beam spots are overlapped with each other.

Japanese Patent Application Laid-Open No. 2007-83309 discloses an aspect in which a laser beam is emitted with a focal point matching with an inside of a substrate having a laminator on its surface to form an affected region in the substrate, and the affected region is used as a starting point of cut.

Japanese Patent Application Laid-Open No. 2008-98465 discloses an aspect in which scanning by means of a laser beam is repeated along one separating line at a plurality of times, and a groove section and a alterated section that are continuous in a direction of the separating line, and an internal alterated section that is not continuous in the direction of the separating line are formed up and down in a depth-wise direction.

The method for forming a division starting point by means of a laser beam and dividing by means of a breaker is advantageous in view of automatism, high-speed performance, stability and high accuracy performance in comparison with diamond scribing that is a conventional mechanical cutting method.

However, when a workpiece formed with a light-emitting element structure such as an LED structure on a substrate made of a hard, brittle, and optically transparent material such as sapphire is divided into a unit of a chip (divided piece), light generated inside the light-emitting element is absorbed in a processing trail resulted from the laser processing, and thus an efficiency of extracting the light from the element is deteriorated. Particularly a problem is noticeable for the light-emitting element structure using the sapphire substrate having high refractive index.

After a great deal of consideration, the inventors of the present invention have learned that it is effective for solving the above problem to form fine uneven portions having about a few $\mu$m pitch on a laser beam irradiated position of a workpiece (a position to be processed) and thereby to reduce total reflectivity on the position.

As for Japanese Patent Application Laid-Open No. 2004-9139, International Publication No. 2006/062017 and Japanese Patent Application Laid-Open No. 2007-83309, awareness of the above problem is not recognized therein. So naturally, they do not include nor suggest means for solving the problem.

For example, Japanese Patent Application Laid-Open No. 2004-9139 and International Publication No. 2006/062017 disclose the technique that forms a V-shaped cross section having a uniform shape along the direction of the division planned line, and this technique is opposite to the aspect in which the above uneven portion is formed.

On the other hand, Japanese Patent Application Laid-Open No. 2008-98465 describes that when a separating surface is completely melted down by a laser beam, the light extracting efficiency is deteriorated, and further, it discloses the aspect in which one division planned line is processed up and down at a plurality of times. However, the steps in the aspect are complicated and require takt time.

SUMMARY OF THE INVENTION

It is an object of the present invention to provide a laser processing method for irradiating a laser beam and processing a workpiece, and a laser processing apparatus that realizes the processing, and particularly the processing forming a division starting point at the time of dividing a workpiece.

According to the present invention, a laser processing method for forming a processed region on a workpiece includes: a) a step of emitting a pulse laser beam from a predetermined light source; and b) a step of irradiating the pulse laser beam emitted at the step a) to the workpiece while scanning and forming the processed region on the workpiece, wherein an irradiated range on a surface of the workpiece is modulated by modulating an irradiating state of the pulse laser beam from the predetermined light source, the processed region has a continuous portion in a first direction, whereas a state of a cross section vertical to the first direction changes in the first direction.

A laser processing apparatus of the present invention includes a light source for emitting a pulse laser beam, a stage that is provided to be movable relatively with respect to the light source and on which a workpiece is placed, and a control element for controlling emission of the pulse laser beam from the light source and a movement of the stage. The laser processing apparatus emits the pulse laser from the light source while moving the stage on which the workpiece is placed relatively with respect to the light source, and forms a processed region on the workpiece while scanning by means of the pulse laser beam. The control element controls the light source and an operation of the stage so that an irradiating state of the pulse laser beam from the light source is modulated at the time of scanning by means of the pulse laser beam, and the laser processing apparatus forms the processed region that has a portion continuous in a first direction and in which a state of a cross section vertical to the first direction changes in the first direction.

According to the present invention, the processed region as a division starting point at the time of dividing the workpiece can be formed into a shape whose surface side is continuous but whose bottom portion is discontinuous. As a result, when the light emitting structure is divided, a divided piece in which a light absorption performance on a processing trail is repressed can be obtained.

It is, therefore, an object of the present invention to provide the laser processing method for performing the laser processing with which light absorption on the processing trail is reduced, and the laser processing apparatus for realizing the method.

These and other objects, features, aspects and advantages of the present invention will become more apparent from the following detailed description of the present invention when taken in conjunction with the accompanying drawings.

BRIEF DESCRIPTION OF THE DRAWINGS

FIG. 1 is a diagram schematically illustrating a constitution of a laser processing apparatus according to a preferred embodiment of the present invention;
FIG. 2 is a diagram describing a relationship among a repetition frequency of a laser beam, a scanning speed of a stage and an interval of beam spot centers, in the laser processing apparatus;
FIG. 3 is a perspective view schematically illustrating a relationship between an aspect of irradiating of the laser beam and a processed region to be formed in a first modulating mode;
FIG. 4 is a top view and a cross-sectional view schematically illustrating the relationship between the aspect of irradiating of the laser beam and the processed region to be formed in the first modulating mode;
FIG. 5 is a diagram schematically illustrating a relationship between an irradiation energy and both of a size of a beam spot and a shape of the processed region in a second modulating mode;
FIG. 6 is a diagram schematically illustrating a relationship between a position of the beam spot and a moving direction of a workpiece in a third modulating mode;
FIG. 7 is a diagram illustrating a shape of the processed region on a surface of the workpiece according to a modified embodiment;
FIG. 8 is a diagram illustrating an optical microscopical image of an upper surface of the workpiece after processing in the first modulating mode in the case that a sapphire substrate is the workpiece;
FIG. 9 is a diagram illustrating an optical microscopical image of a side surface of a divided piece obtained by breaking the sapphire substrate shown in FIG. 8 using the processed region as a division starting point;
FIG. 10 is a diagram illustrating an optical microscopical image of an upper surface of the workpiece after processing in the second modulating mode in the case that the sapphire substrate is the workpiece; and
FIG. 11 is a diagram illustrating an optical microscopical image of a side surface of a divided piece obtained by breaking the sapphire substrate shown in FIG. 10 using the processed region as the division starting point.

DESCRIPTION OF THE PREFERRED EMBODIMENTS

<Outline of Laser Processing Apparatus>

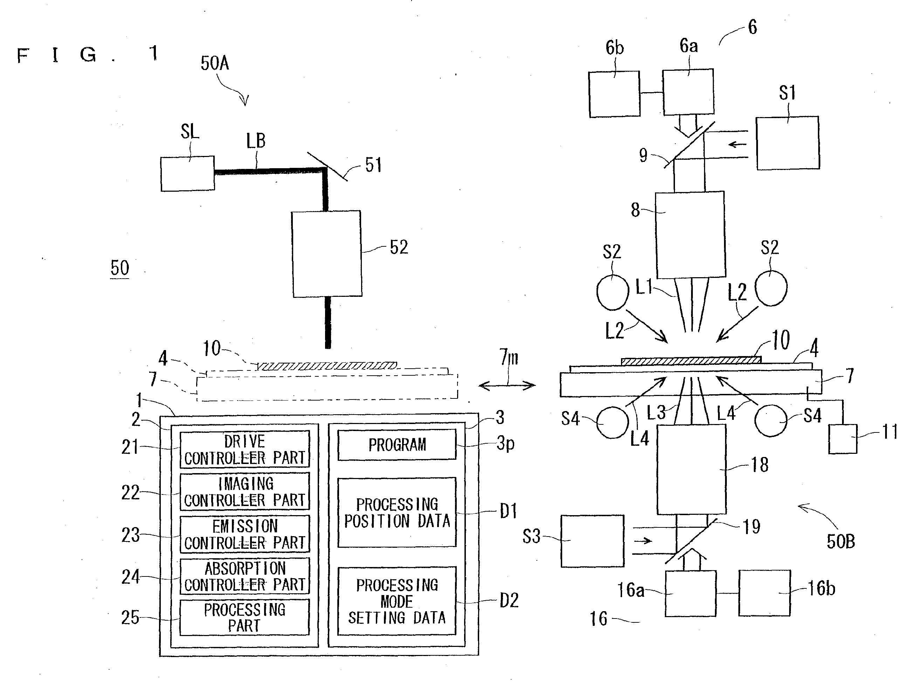

FIG. 1 is a diagram schematically illustrating a constitution of a laser processing apparatus 50 according to a preferred embodiment of the present invention. The laser processing apparatus 50 mainly includes a laser beam irradiating part 50A, an observing part 50B, a stage 7 made of a transparent member such as quartz on which a workpiece 10 is placed, and a controller 1 for performing various operations (an observing operation, an aligning operation, a processing operation, etc.) of the laser processing apparatus 50. The laser beam irradiating part 50A irradiates a laser beam to the workpiece 10 placed on the stage 7. The observing part 50B performs front-surface observation for directly observing a side of the workpiece 10 to which a laser beam is irradiated (this is called a front surface), and rear-surface observation for observing a side of the workpiece 10 placed on the stage 7 (this is called a rear surface) via the stage 7.

The stage 7 can be moved in a horizontal direction between the laser beam irradiating part 50A and the observing part 50B by a moving mechanism 7m. The moving mechanism 7m moves the stage 7 to predetermined XY biaxial directions in a horizontal plane by means of a function of a driver, not shown. This realizes a movement of a laser beam irradiated position in the laser beam irradiating part 50A, a movement of an observing position in the observing part 50B, and a movement of the stage 7 between the laser beam irradiating part 50A and the observing part 50B. The moving mechanism 7m can perform a rotating operation (θ rotation) in the horizontal plane about a predetermined rotating axis, independently from the horizontal drive.

The laser processing apparatus 50 can suitably switch between the front-surface observation and the rear-surface observation. As a result, suitable observation according to a material and a state of the workpiece 10 can be performed flexibly and quickly.

The stage 7 is formed by the transparent material such as quartz, and a suction piping, not shown, to be an air inlet passage for absorbing and fixing the workpiece 10 is provided inside the stage 7. The suction piping is provided by, for example, drilling a hole on a predetermined position of the stage 7 by means of machining process.

With the workpiece 10 being placed on the stage 7, a sucking unit 11 such as a suction pump performs suction on the suction piping so as to apply a negative pressure to a suction hole provided to a front end of the suction piping located on the put on side of the stage 7. Because of the suction, the workpiece 10 (and a transparent sheet 4) is fixed to the stage 7. FIG. 1 illustrates a case where the workpiece 10 to be processed is stuck to the transparent sheet 4, but the sticking of the transparent substrate protective sheet 4 is not essential.

The laser beam irradiating part 50A is constituted so as to be capable of processing the workpiece 10 by irradiating a laser beam to the workpiece 10 placed on the stage 7.

More specifically, in the laser beam irradiating part 50A, a laser beam LB is emitted from a laser beam source SL and is reflected by a dichroic mirror 51 provided into a lens barrel, not shown. Thereafter, the laser beam LB is condensed by a condensing lens 52 so as to be focused on a portion to be processed of the workpiece 10 placed on the stage 7, with the stage 7 being located on the laser beam irradiating part 50A, and is irradiated to the workpiece 10. Combining the irradiation of the laser beam LB and the movement of the stage 7 makes it possible to process the workpiece 10 with the laser beam LB relatively scanning the workpiece 10. For example, the surface of the workpiece 10 is scribed, so that the workpiece 10 can be divided.

In the laser processing apparatus 50, at the time of the processing, the laser beam LB can be irradiated as needed with the focus position being in a defocused state that it is intentionally shifted from the surface of the workpiece 10.

<Laser Beam Source>

As for the laser beam source SL, it is preferable to use an Nd:YAG laser. An ND: $YVO_4$ laser or another solid-state laser may be used. Further, the laser beam source SL preferably has a Q switch.

Adjustment of a wavelength, an output, a repetition frequency of a pulse, a pulse width and the like of the laser beam LB emitted from the laser beam source SL is realized by an irradiation control part 23 of the controller 1. When a predetermined setting signal according to processing mode setting data D2 is transmitted from a processing part 25 to the irradiation control part 23, the irradiation control part 23 sets an irradiating condition of the laser beam LB according to the setting signal.

In the preferred embodiment of the present invention, it is preferable that the wavelength of the laser beam LB is in a wavelength range of 150 nm to 563 nm. When the Nd: YAG laser is used as the laser beam source SL, a triple harmonic (wavelength: about 355 nm) of it is preferably used. Further, it is preferable that the repetition frequency of the pulse is 10 kHz to 200 kHz and the pulse width is 50 nsec or more.

It is preferable that the laser beam LB is focused to a beam diameter of about 1 $\mu$m to 10 $\mu$m by a condensing lens 18 so as to be irradiated. In this case, a peak power density in the irradiation of the laser beam LB is about 1 GW/cm$^2$ to 10 GW/cm$^2$.

A polarization state of the laser beam LB emitted from the laser beam source SL may be circular polarization or linear polarization. In the case of the linear polarization, however, from viewpoints of a curve of a processed cross section and an energy absorption rate in a crystalline workpiece material, it is preferable that a polarizing direction and a scanning direction are approximately parallel with each other, for instance, an angle made by these directions is within $\pm$1°. Further, when emitted light is linear polarized light, it is preferable that the laser processing apparatus 50 has an attenuator, not shown. The attenuator is arranged on a suitable position of an optical path of the laser beam LB, and adjusts intensity of the emitted laser beam LB.

<Illumination System and Observation System>

The observing part 50B is constituted so that, while irradiating epi-illumination light L1 from an epi-illumination light source S1 and oblique transmissive illumination light L2 from an oblique illumination light source S2 to the workpiece 10 placed on the stage 7 from above the stage 7 in a superimposing manner, front-surface observation with a front-surface observing unit 6 from an upper side of the stage 7 and rear-surface observation with a rear-surface observing unit 16 from a lower side of the stage 7 can be performed.

Concretely, the epi-illumination light L1 emitted from the epi-illumination light source S1 is reflected by a half mirror 9 provided into the lens barrel, not shown, and is irradiated to the workpiece 10. The observing part 50B has the front-surface observing unit 6 including a CCD camera 6a provided above the half mirror 9 (above the lens barrel) and a monitor 6B connected to the CCD camera 6a. As a result, a bright field image of the workpiece 10 can be observed at a real time with the epi-illumination light L1 being emitted.

In the observing part 50B, a rear-surface observing unit 16 is comprised including a CCD camera 16a provided below the stage 7, more preferably, provided below a half mirror 19 described later (below the lens barrel) and a monitor 16b connected to the CCD camera 16a. One monitor may be commonly used as the monitor 16b and the monitor 6b of the front-surface observing unit 6.

Further, coaxial illumination light L3 emitted from a coaxial illumination light source S3 provided below the stage 7 may be reflected by the half mirror 19 provided into the lens barrel, not shown, and is condensed by the condensing lens 18. Thereafter, the coaxial illumination light L3 may be irradiated to the workpiece 10 via the stage 7. It is more preferable that an oblique illumination light source S4 is provided below the stage 7 and oblique illumination light L4 can be irradiated to the workpiece 10 via the stage 7. The coaxial illumination light source S3 and the oblique illumination light source S4 can be suitably used for a case where the workpiece 10 is observed from the rear surface, such as a case where the observation from the front surface side is difficult due to reflection from an opaque metal layer present on the front surface of the workpiece 10.

<Controller>

The controller 1 further comprises a controlling part 2 controlling the operation of each part described above that realizes the processing of the workpiece 10 in various aspects, described later, and a storing part 3 storing a program 3p for controlling the operation of the laser processing apparatus 50 and various data referred to at the time of the processing.

The controlling part 2 is realized by a general-purpose computer such as a personal computer or a microcomputer. The program 3p stored in the storing part 3 is loaded into and executed by the computer, and thus various components are realized as functional components of the controlling part 2.

Concretely, the controlling part 2 mainly includes a drive control part 21, an imaging control part 22, an irradiation control part 23, an absorption control part 24 and a processing part 25. The drive control part 21 controls various operations of driving parts relating to the processing such as driving of the stage 7 by means of the moving mechanism 7m and a focusing operation of the condensing lens 18. The imaging control part 22 controls imaging by means of the CCD cameras 6a and 16a. The irradiation control part 23 controls irradiation of the laser beam LB from the laser beam source SL. The absorption control part 24 controls the operation for absorbing and fixing the workpiece 10 to the stage 7 by means of the sucking unit 11. The processing part 25 executes the processing on the position to be processed according to the given processing position data D1 and processing mode setting data D2.

The storing part 3 is realized by a storage medium such as ROM, RAM and a hard disk. The storing part 3 may be realized by the component of the computer realizing the controlling part 2, or a hard disk or the like may be provided separately from the computer.

It is preferable that various input instructions given by an operator to the laser processing apparatus 50 are performed by using GUI realized in the controller 1. For example, a processing menu is provided as GUI by a function of the processing part 25.

<Alignment Operation>

In the laser processing apparatus 50, prior to the processing, an alignment operation for finely adjusting an arrangement position of the workpiece 10 is executable in the observing part 50B. The alignment operation is a process for matching an XY coordinate axis determined in the workpiece 10 with a coordinate axis of the stage 7. The alignment operation can be performed by applying a publicly-known technique, and may be suitably performed according to a processing pattern. For example, when a repetition pattern is formed on the surface of the workpiece 10 such that a lot of device chips manufactured by using one mother substrate are cut out, a pattern matching method is used to realize a suitable alignment operation. In this case, as schematically described below, images of a plurality of alignment marks formed on the workpiece 10 are acquired by the CCD camera 6a or 16a, the processing part 25 specifies an alignment amount based on a relative relationship among the imaging positions of the imaged images, and the driving control part 21 allows the moving mechanism 7m to move the stage 7 according to the alignment amount. As a result, the alignment is realized.

The alignment operation is performed so that the processing position in the processing is accurately specified. After the alignment operation is completed, the stage 7 on which the workpiece 10 is placed is moved to the laser beam irradiating part 50A, and the processing is performed by irradiating the laser beam LB. The movement of the stage 7 from the observing part 50B to the laser beam irradiating part 50A is ensured so that a processing planned position presumed at the time of the alignment operation does not shift from the actual processing position.

<Processing Mode>

The laser processing apparatus 50 according to the preferred embodiment is characteristic in that the processing (laser processing) by (relatively) scanning with the laser beam LB is performable in various processing modes. This is realized by varying a combination of the irradiating condition of the laser beam LB from the laser beam source SL and the scanning condition of the laser beam LB to the workpiece 10 by means of the movement of the stage 7.

The processing mode is roughly divided into a continuous mode for continuously irradiating the laser beam LB along a division planned position under the irradiating condition that processing sections vertical to the scanning direction on any position in the scanning direction of the laser beam LB is approximately uniform, and a modulating mode for irradiating the laser beam LB under the irradiating condition that an irradiated range of the laser beam LB on the surface of the workpiece is modulated (periodically changes). The modulating mode includes various aspects whose irradiating condition and scanning condition of the laser beam vary, and the laser processing apparatus 50 can execute at least one of them.

As schematically described below, the continuous mode is a mode for forming a uniform processed area (or processing trace) along a division planned line L. The modulating mode is a mode for forming a processed area (or processing trace) having an uneven shape along the division planned line L.

In the case of eliminating process, a cross section of a processed groove corresponds to a processing cross section, and in the case of a meting alteration method, a cross section of an affected region corresponds to the processing cross section.

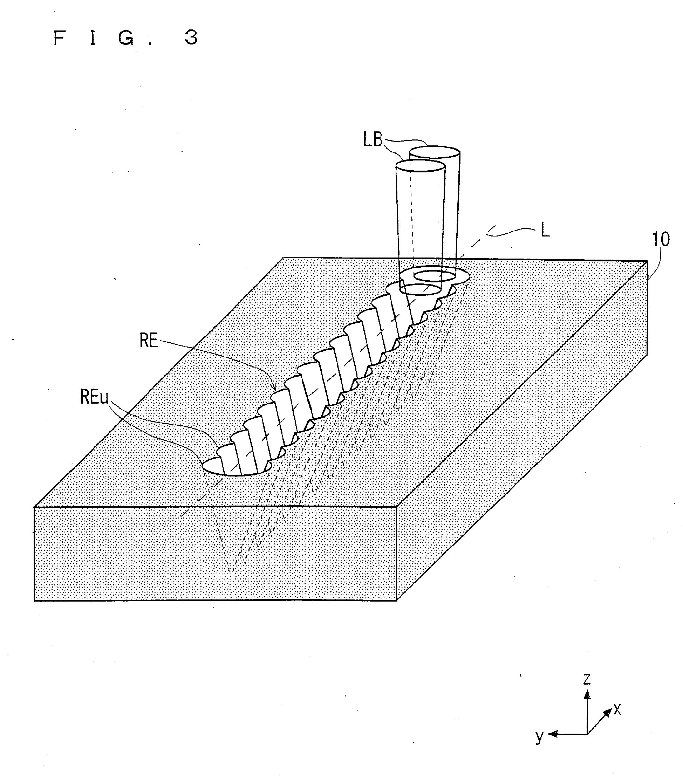

It is preferable that the processing mode can be selected according to the processing menu presented to be usable for an operator in the controller 1 by the function of the processing part 25. The processing position data D1 including a position of the division planned line L (FIG. 3) of the workpiece 10 is stored in the storing part 3 of the controller 1. Further, the processing mode setting data D2 including conditions of respective parameters of the laser beam and drive conditions of the stage 7 (or their settable range) is stored in the storing part 3 according to the aspects of the laser processing in the respective processing modes. The processing part 25 acquires the processing position data D1 and the condition corresponding to the selected processing mode from the processing mode setting data D2, and controls the operations of the corresponding respective parts via the drive control part 21, the irradiation control part 23 and the like so that the operations according to the conditions are performed.

The processing in the continuous mode is the publicly-known processing to be performed in the conventional laser processing apparatuses disclosed in Japanese Patent Application Laid-Open No. 2004-9139 and International Publication No. 2006/062017. For this reason, the detailed description thereof is omitted in the preferred embodiment. The following describes in detail the processing in the modulating mode specific to the laser processing apparatus 50 according to the preferred embodiment.

<First Modulating Mode: Laser beam Irradiation for Discrete Beam Spot>

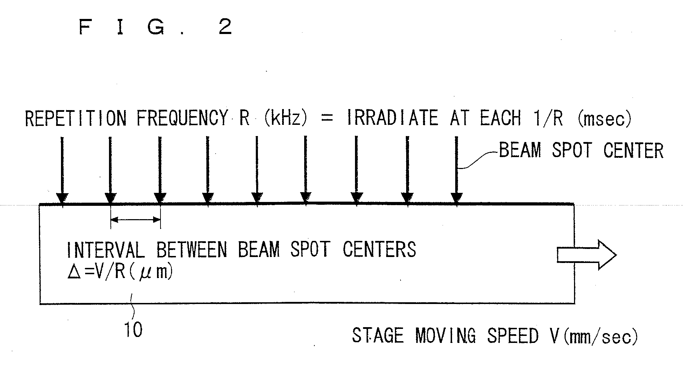

FIG. 2 is a diagram describing a relationship among a repetition frequency of the laser beam LB, a scanning speed of the stage 7 and an interval between beam spot centers, in the laser processing apparatus 50.

When the repetition frequency of the laser beam is R (kHz), one laser pulse is generated from the laser beam source SL for each I/R (msec). If the stage 7 on which the workpiece 10 is placed is moved at a speed V (mm/sec), while a certain pulse is generated and a next laser pulse is generated, the workpiece 10 moves by V x (1/R) = V/R ($\mu$m). Therefore, the interval between a certain beam center position of the laser pulse and a beam center position of a laser pulse generated next, namely, the interval of the beam spot centers $\Delta$ ($\mu$m) is determined as $\Delta$ = V/R.

For this reason, when a beam diameter D on the surface of the workpiece is larger than $\Delta$ = V/R, individual laser pulses are overlapped with each other, but when the beam diameter D is smaller than $\Delta$ = V/R, individual laser pulses are not overlapped with each other. The first modulating mode is a mode for performing laser processing utilizing this.

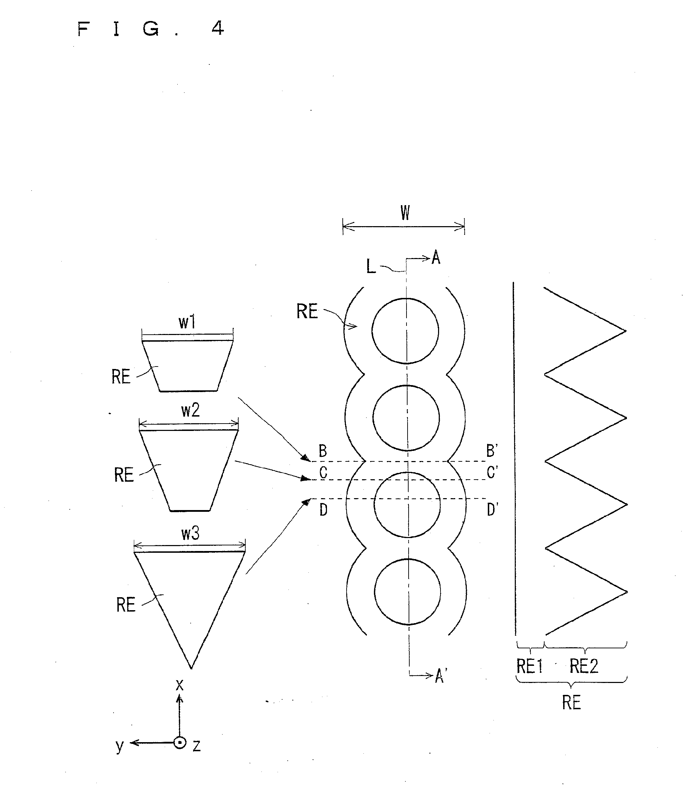

FIGS. 3 and 4 are diagrams schematically illustrating a relationship between the aspect of irradiating of the laser beam LB and the processed region RE to be formed in the first modulating mode. FIG. 3 is a perspective view. For convenience, FIGS. 3 and 4 show a three-dimensional coordinate in which the direction of the division planned line L is an x axial direction, a direction perpendicular to the x axis on the surface of the workpiece 10 is a y axial direction, and a direction perpendicular to the surface of the workpiece 10 is a z axial direction (the same holds true for the drawings thereafter). FIG. 4 is an XY top view of a processed region RE (center diagram), a cross-sectional view taken along line A-A' (right diagram), and cross sectional views taken along lines B-B', C-C' and D-D' (left diagrams). The cross-sectional view taken along line A-A' is the one in a plane parallel with the division planned line L. The cross-sectional views taken along lines B-B', C-C' and D-D' are the ones in a plane vertical to the division planned line L on different positions thereon.

In the first modulating mode, the laser beam LB is irradiated under the irradiating condition that the beam spot BS of the laser beam LB per unit pulse is discretely positioned in the direction of the division planned line L, namely, under the irradiating condition that the irradiating state periodically changes. This is realized when the beam diameter D and the interval of the beam spot centers $\Delta = V/R$ hold a relationship $D < \Delta$. Concretely, the irradiating condition of the laser beam and the drive condition of the stage 7 are described in the processing mode setting data D2 so that they can be set in ranges of 10 (kHz) $\leq$ R $\leq$ 200 (kHz), 30 (mm/sec) $\leq$ V $\leq$ 1000 (mm/sec), $D < V/R$ and W/4 ($\mu$m) $\leq$ V/R $\leq$ W/2 ($\mu$m). W represents a processing planned width in a direction vertical to the division planned line L.

Discrete positioning of the beam spots BS at the time of scanning by means of the laser beam LB along the direction of the division planned line L means that a place to which the laser beam LB is irradiated and a place to which the laser beam LB is not irradiated are present in the direction of the division planned line L. Therefore, this corresponds to the aspect of irradiating the laser beam LB where the irradiated range on the surface of the workpiece is modulated (periodically changed).

When scanning by means of the laser beam is performed under such a condition, the processed region RE having shapes shown in FIGS. 3 and 4 is formed. Generally, the processed region RE has a shape such that a lot of unit processed regions REu having an approximately elliptical cone shape (or an approximately wedge shape) formed by individual laser pulses are formed to be continuously adjacent in the direction of the division planned line L, although the beam spots of the individual laser pulses are discrete.

More specifically, the processed region RE is continuous on the surface of the workpiece 10, whereas a width and a cross-section shape in the direction vertical to the division planned line L vary according to positions in the direction of the division planned line L (x axial direction) as shown in the cross-sectional views taken along lines B-B', C-C' and D-D' of FIGS. 3 and 4. That is to say, the processed region RE has a shape such that a state of a cross section (yz cross section) vertical to the x axial direction changes in the x axial direction, while it has a continuous portion in the direction of the division planned line L (x axial direction). In the case shown in FIG. 4, the processed region RE is formed so that a processing width in the y axial direction near the surface of the workpiece 10 changes between w1 to w3 along the x axial direction. If the processing width w2 in the cross section taken along line C-C' is equal to a processing planned width W, the processing in the first modulating mode can be understood as an aspect such that a region having a processing width larger than the processing planned width W and a region having a processing width smaller than the processing planned width W are formed alternatively and repeatedly. In the actual processing, in some cases, w1 $\cong$ w2 and w3 $\cong$ w2.

From another standpoint, as shown in the cross section taken along line A-A' of FIG. 4, the processed region RE includes a continuous region RE1 and a discontinuous region RE2. The continuous region RE1 is continuous in the x axial direction near the surface of the workpiece 10. The discontinuous region RE2 is continuously adjacent to the continuous region RE1 in the y axial direction, but is discontinuous itself in the x axial direction.

In any cases, the processed region RE has unevenness on an xy cross section and a zx cross section, namely, along the x axial direction. The pitch of the unevenness is about a few $\mu$m to several tens of $\mu$m, even though it varies according to the irradiating condition of the laser beam LB and the drive condition of the stage 7.

Concrete values of V and R may be suitably determined in consideration of a material, an absorption factor, a heat conductivity and a melt point of the workpiece 10. Further, the irradiation energy of the pulse may be suitably determined within a range of 10 $\mu$J to 1000 $\mu$J.

However, when V/R < W/4 ($\mu$m), the overlapping of the unit processed regions REu becomes large and thus a difference between the processing planned width and the actual processing width becomes small. As a result, a difference between this case and the processing in the continuous mode is reduced. On the other hand, when V/R > W/2 ($\mu$m), a distance between adjacent beam spots becomes too large, and thus the individual unit processed regions REu are not continuously adjacent. As a result, this case is not preferable.

<Second Modulating Mode: Energy Modulation>

The first modulating mode is a mode characterized in that the processing is performed under the condition that V/R > D. However, the second modulating mode is a mode for performing the processing under the condition that V/R $\leq$ D. That is to say, this is the processing mode that can be used even under the condition that the laser beam LB is irradiated with the adjacent beam spots overlapping with each other.

In general, as the irradiation energy E of the laser pulse to be irradiated is stronger, the workpiece 10 is processed up to a deeper region in a thickness-wise direction, and the processing range on the surface is widened. The second modulating mode is a processing mode utilizing this.

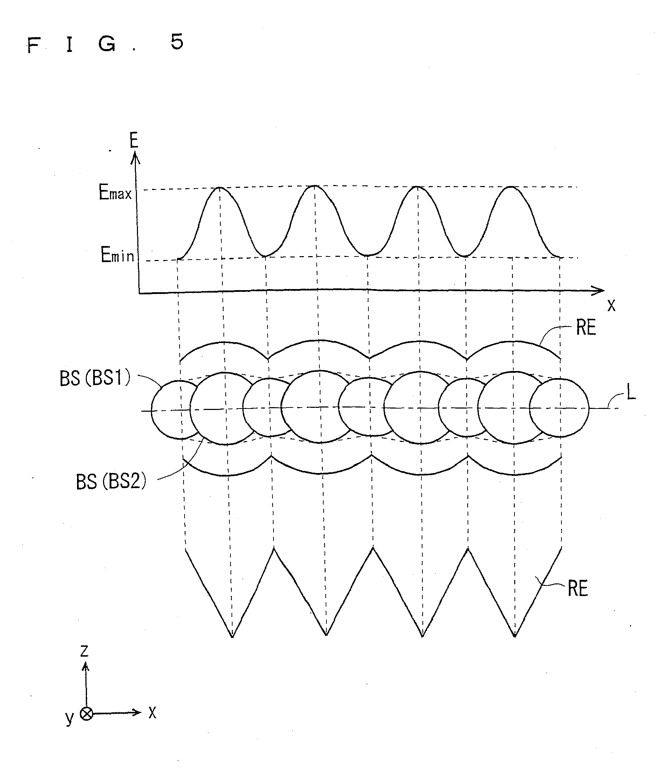

FIG. 5 is a diagram schematically illustrating a relationship between the irradiation energy E and both of the size of the beam spot BS and the shape of the processed region RE in the second modulating mode. In the second modulating mode, when the scanning by means of the laser beam LB is performed along the division planned line L, the processing part 25 controls the operations of the respective parts so that the irradiation energy of the laser beam LB periodically changes between a minimum value $E_{min}$ and a maximum value $E_{max}$ as shown in FIG. 5. That is to say, the laser processing apparatus 50 is controlled so that the scanning by means of the laser beam is performed with the irradiation energy being modulated. As a result, the size of the beam spot BS of the laser beam LB on the surface of the workpiece 10 changes according to the value of the irradiation energy. FIG. 5 illustrates a beam spot BS (BS1) at the time of $E = E_{min}$ and a beam spot BS (BS2) at the time of E = $E_{max}$, but the beam spot BS can take a middle size between them. As a result, the processed region RE having the similar shape to that in FIG. 4 is formed.

Concretely, $E_{min}$ and $E_{max}$ are determined so that $5 (\mu J) \leq E_{min} \leq 100 (\mu J)$ and $20 (\mu J) \leq E_{max} \leq 1000 (\mu J)$. Further, in the second mode, the values R and V are set so that ranges of $50 (kHz) \leq R \leq 200 (kHz)$ and $50 (mm/sec) \leq V \leq 1000 (mm/sec)$ are satisfied. Further, it is preferable that a modulation cycle is about $2 \mu m$ to $20 \mu m$. In the second modulation mode, these setting ranges are described in the processing mode setting data D2.

As is clear from FIG. 5, modulation of the irradiation energy E, after all, is equivalent to modulation of the actual beam spot diameter effective for the processing. Therefore, the second modulating mode also corresponds to the aspect of irradiating the laser beam LB where the irradiated range on the surface of the workpiece is modulated (periodically changed).

<Third Modulating Mode: Scanning by means of the Laser Beam in Direction Perpendicular to Division Planned Line>

The third modulating mode is a processing mode for performing the scanning by means of the laser beam LB in the direction perpendicular to the division planned line and simultaneously irrdiating the laser beam LB so that the beam spots BS for unit pulse are discretely located.

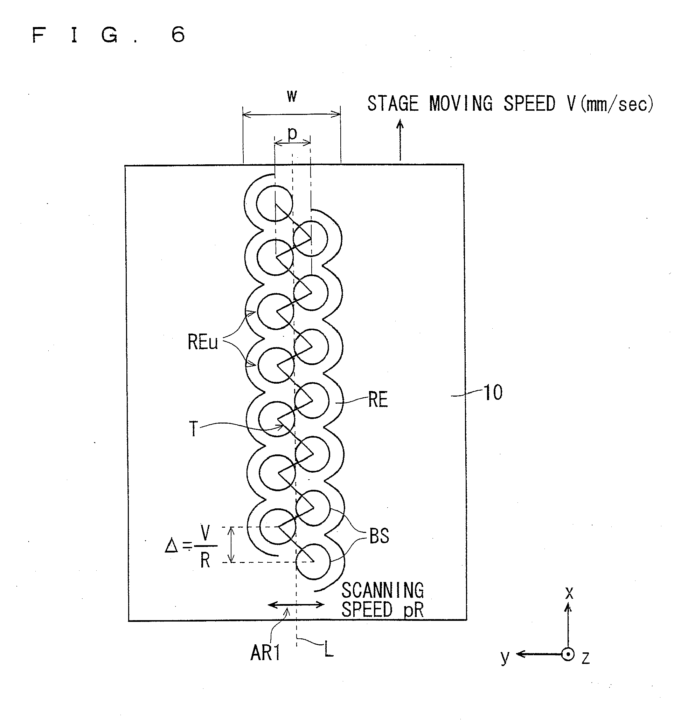

FIG. 6 is a diagram schematically illustrating a relationship between the position of the beam spot BS and the moving direction of the workpiece 10 in the third modulating mode. In the third modulating mode, the stage 7 on which the workpiece 10 is placed is moved so that the division planned line L is along the x axial direction, whereas as shown by an arrow AR1 in FIG. 6, reciprocating scanning by means of the laser beam B is performed in the direction vertical to the division planned line L (y axial direction). This is realized by providing a scanning mechanism such as a galvanomirror to the laser beams source SL or on a middle of the irradiating passage of the laser beam LB.

A distance between a beam spot center at the time of generating a certain laser pulse and a beam spot center at the time of generating a next laser pulse is matched with a scanning width $p (\mu m)$ in the y axial direction of the laser beam LB. In this case, since one laser pulse is emitted from the laser beam source SL at each $1/R$ (msec), when the scanning speed in the y axial direction is $p/(1/R) = pR$, as shown in FIG. 6, the laser beam LB is irradiated so that the beam spots BS are positioned alternatively via the division planned line L.

At this time, the reciprocating scanning by means of the laser beam LB is performed only in the y axial direction, but since the workpiece 10 moves to the x axial direction, the beam spots BS are discretely located so that $\Delta = V/R$ similarly to the first modulating mode. That is to say, the irradiating state of the laser beam LB periodically changes.

As a result, as shown in FIG. 6, a scanning trajectory T of the laser beam LB cross the division planned line L repeatedly and alternatively in the workpiece 10. In a manner of speaking, the laser beam LB is irradiated by following the zig-zag scanning trajectory T with the division planned line L being an axis.

In the case of the third modulating mode, the irradiated position and the irradiated range of the laser beam LB in the y axial direction change along the direction of the division planned line L (x axial direction) (a nonirradiated position is also present). Therefore, this case also corresponds to the aspect of irradiating the laser beam LB where the irradiated range on the surface of the workpiece is modulated (periodically changed).

As a result of the irradiation of the laser beam LB in the third modulating mode, the processed region RE having a surface shape shown in FIG. 6 is formed. Schematically, the processed region RE in this case has such a shape that a lot of unit processed regions REu having an approximately elliptical cone shape (or an approximately wedge shape) formed by individual laser pulses are continuously adjacent along the scanning trajectory T although the beam spots of the individual laser pulses are discrete.

In this case, the processed region RE is continuous on the surface of the workpiece 10, whereas its width and its cross-section shape in the direction vertical to the division planned line L vary according to positions in the direction of the division planned line L (x axial direction). That is to say, the processed region RE has a shape such that the state of the cross section (yz cross section) vertical to the x axial direction changes in the x axial direction, while it has a continuous portion in the direction of the division planned line L (x axial direction).

Not shown but the processed region RE obtained in the third modulating mode also includes a continuous region that is continuous in the x axial direction near the surface of the workpiece 10 and a discontinuous region that is continuous to the continuous region in the y axial direction but is discontinuous itself in the x axial direction.

That is to say, the processed region RE obtained in the third modulating mode also has unevenness on the xy cross section and the zx cross section, namely, along the x axial direction. The pitch of the unevenness is about a few μm to several tens of μm, even though it varies according to the emitting condition of the laser beam LB and the drive condition of the stage 7.

In the third modulating mode, since the beam spots BS per unit pulse are discretely located, the beam diameter D, the interval of the beam spot centers $\Delta = V/R$ and the scanning width hold a relationship that $D < (\Delta^2 + P^2)^{1/2}$. Further, the irradiating condition of the laser beam and the drive condition of the stage 7 are described in the processing mode setting data D2 so as to be settable within ranges of 10 (kHz) $\leq R \leq$ 200 (kHz) and 30 (mm/sec) $\leq V \leq$ 1000 (mm/sec). It is to be noted that 1 (μm)b $\leq p \leq$ 3(μm). For example, it is preferable that p is set to about 1.5 μm. The concrete values V and R may be suitably determined in consideration of the material, the absorption factor, the head conductivity and the melt point of the workpiece 10. Further, the irradiation energy of the pulse may be suitably determined within the range of 10 μJ to 1000 μJ.

<Modified Example of Third Modulating Mode>

In the third modulating mode, the beam spots BS per unit pulse are discretely located, but it is possible to perform the processing with the adjacent beam spots being overlapped with each other, while the scanning by means of the laser beam LB is being performed in the direction perpendicular to the division planned line L.

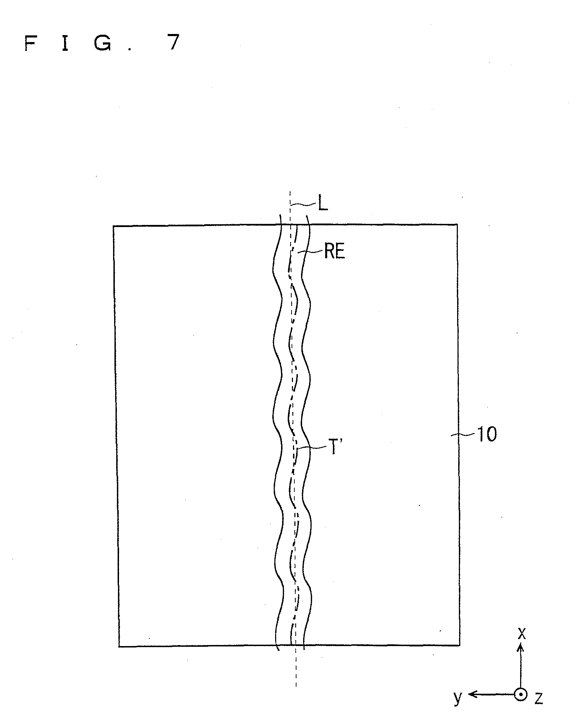

FIG. 7 is a diagram illustrating a shape of the processed region RE formed in such case on the surface of the workpiece 10. In this case, scanning trajectory T' crosses the division planned line L repeatedly and alternatively. The processed region RE is formed such that it has the unevenness on the xy cross section, but is approximately continuous on the zx cross section.

<Forming of Division Starting Point in the Modulating Mode>

The processing in the first to third modulating modes is suitable particularly for forming a division starting point in order to divide the workpiece 10 that a light-emitting element structure such as an LED structure is formed on a hard or brittle and optically transparent substrate such as sapphire, GaN or SiC, into a unit of chip (divided piece).

That is to say, the processed region RE having the uneven shape with a fine pitch of about a few μm is formed by using the above modulating mode, and a workpiece is broken at the processed region as the division starting point so that chips are obtained. Such break can be realized by exerting, from the upper surface of the workpiece 10, forces on opposite sides with the processed region RE interposed therebetween, in the opposite directions with the processed region RE as an axis. In this case, the division advances from a bottom end portion of the processed region RE as the starting point to a lower portion of the workpiece 10. As a result, a break surface approximately vertical to upper and lower surfaces of the workpiece 10 is formed.

Although the portion where the processed region RE has been formed remains as a processing trail, this portion has unevenness formed as a result of the processing in the modulating mode, and thus total reflection derived from the shape of the portion hardly occurs. As a result, the light absorption on this portion is repressed, and emitted light in this portion is efficiently transmitted to the outside.

As described above, according to the preferred embodiment, the processed region as the division starting point at the time of the dividing a workpiece can be formed so as to have a shape continuous on the surface side but discontinuous on a bottom portion by using any one of the first to third modulating modes. Accordingly, when the light emitting element structure as the workpiece is divided, light emitting element chips with excellent light extracting efficiency in which light absorptive capacity on the processing trail is repressed can be obtained.

Example

Example 1

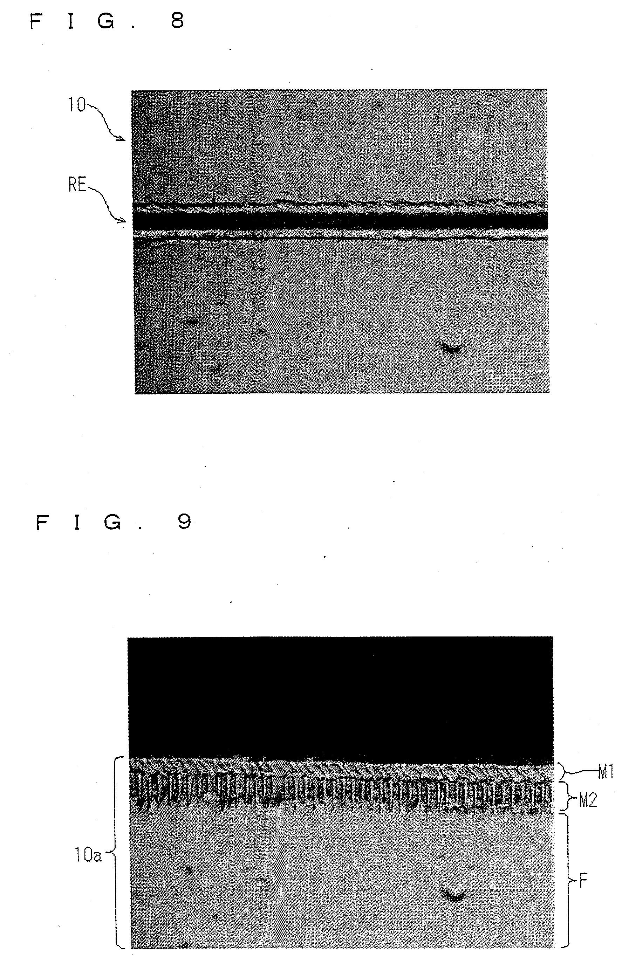

FIG. 8 illustrates an optical microscopical image of the upper surface of the workpiece 10 after an eliminating process by the first modulating mode in the case that a sapphire substrate is workpiece 10. The surface portion of the processed region RE (corresponding to the continuous region REI) uniformly extends in right-left direction in the drawing. The processing is performed under conditions such that R is 66 kHz, V is 200 mm/sec, the irradiation energy is 1.5 W, and the defocus value is -12 μm.

FIG. 9 illustrates an optical microscopical image of a side surface of the divided piece 10a obtained as a result of breaking after the processing the sapphire substrate shown in FIG. 8 with the processed region RE functioning as the division starting point.

In FIG. 9, a processing trail M1 corresponding to the continuous region RE1, a processing trail M2 corresponding to the discontinuous region RE2, and a flat break surface F are confirmed. Particularly on the discontinuous region RE2, fine regions having an approximately wedge shape are discretely present at an approximately uniform interval. They correspond to the unit processed regions REu, and at the time of break, subsidiary fracture occurs only between the fine regions. That is to say, in FIG. 9, it is confirmed that the uneven shape originated from the processed region RE is formed on the divided piece 10a.

Example 2

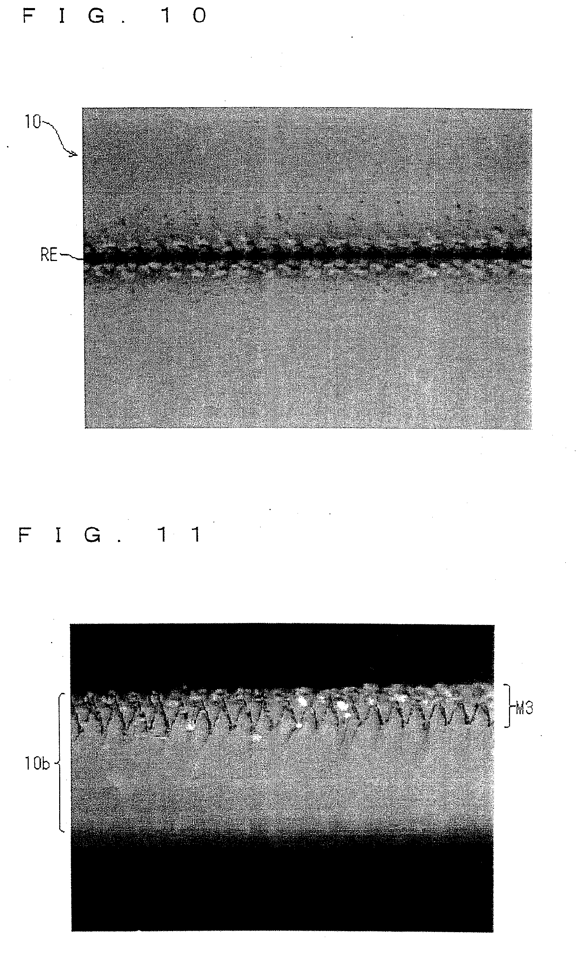

FIG. 10 illustrates an optical microscopical image of the upper surface of the workpiece 10 after the eliminating process in the second modulating mode in the case that the sapphire substrate as the workpiece 10. Similarly to the first embodiment, the surface portion of the processed region RE uniformly extends in a right-left direction in the drawing. The processing is performed under conditions such that R = 100 kHz, V = 100 mm/sec, the defocus value = -10 μm, the irradiation energy is modulated at a cycle of 15 μm within a range of 14 μJ to 20 μJ.

FIG. 11 illustrates an optical microscopical image of the side surface of the divided piece 10b obtained as a result of breaking after the processing the sapphire substrate shown in FIG. 10 with the processed region RE functioning as the division starting point.

In FIG. 11, a processing trail M3 corresponding to the discontinuous region RE2 in which approximately wedge-shaped fine regions are discretely present at an approximately equal interval is confirmed. That is to say, in FIG. 11, it is confirmed that the uneven shape originated form the processed region RE is formed also on the divided piece 10b.

While the invention has been shown and described in detail, the foregoing description is in all aspects illustrative and not restrictive. It is therefore understood that numerous modifications and variations can be devised without departing from the scope of the invention.

A laser processing method for performing laser processing for reducing light absorption on a processing trail is provided. When an irradiated range on a surface of a workpiece is modulated by modulating an irradiating state of a pulse laser beam from a light source, a processed region which has a continuous portion in a first direction and in which a state of a cross section vertical to the first direction changes in the first direction is formed. Concretely, scanning by means of the pulse laser beam is performed under an irradiating condition that beam spots of the laser beam per unit pulse are discrete along the first direction, or scanning by means of the pulse laser beam in the first direction is performed while the irradiation energy of the pulse laser beam is being modulate, or scanning by means of the pulse laser beam in a second direction and a third direction that have predetermined angles with respect to the first direction are alternatively repeated. As a result, a scanning trajectory of the pulse laser beam on the workpiece is allowed to cross the division planned line along the first direction repeatedly and alternatively so that the processed region can be realized.

**Claims**

1. A laser processing method for forming a processed region on a workpiece, comprising:

   a) a step of irradiating a pulse laser beam from a predetermined light source; and
   b) a step of emitting said pulse laser beam emitted at the step a) to said workpiece while scanning and forming said processed region on said workpiece, wherein

   an irradiated range on a surface of said workpiece is modulated by modulating an irradiating state of said pulse laser beam from said predetermined light source,
   said processed region has a continuous portion in a first direction, whereas a state of a cross section vertical to said first direction changes in said first direction.

2. The laser processing method according to claim 1, wherein the irradiating range on the surface of said workpiece is modulated by performing the scanning by means of said pulse laser beam under an irradiating condition that beam spots of said pulse laser beam per unit pulse are discrete along said first direction.

3. The laser processing method according to claim 2, wherein
   when a repetition frequency of said pulse laser beam is determined as R (kHz), a relative moving speed of said pulse laser beam with respect to said workpiece is determined as V (mm/sec), and a planned forming width on said processed region on the surface of said workpiece in a direction perpendicular to said first direction is determined as W (μm), the irradiating range on the surface of said workpiece is modulated by performing the scanning by means of said pulse laser beam along said first direction under irradiating conditions that:

$$10 \ (\text{kHz}) \leq R \leq 200 \ (\text{kHz}),$$

and

$$30 \ (\text{mm/sec}) \leq V \leq 1000 \ (\text{mm/sec}),$$

V/R representing an interval between beam spot centers of said pulse laser beam is
V/R ≥ 1 (μm), and

$$W/4 \ (\mu\text{m}) \leq V/R \leq W/2 \ (\mu\text{m}).$$

4. The laser processing method according to claim 3, wherein the scanning by means of said pulse laser beam is performed under an irradiating condition that V/R ≥ 3 (μm).

5. The laser processing method according to claim 1, wherein the irradiated range on the surface of said workpiece is modulated by performing the scanning by means of said pulse laser beam along said first direction while modulating an irradiation energy of said pulse laser beam.

6. The laser processing method according to claim 1, wherein the irradiated range on the surface of said workpiece is modulated by performing the scanning by means of said pulse laser beams in a second direction and a third direction that have predetermined angles with respect to said first direction repeatedly and alternatively so as to cross a scanning trajectory of said pulse laser beam on said workpiece with a division planned line along said first direction repeatedly and alternatively.

7. The laser processing method according to claim 6, wherein the irradiated range on the surface of said workpiece is modulated by performing the reciprocating scanning by means of said pulse laser beam in a direction vertical to a moving direction of said workpiece to cross as said scanning trajectory of said pulse laser beam with the division planned line along said first direction repeatedly and alternatively.

8. The laser processing method according to claim 1, wherein said processed region is formed to have a first region that is continuous in said first direction on the surface of said workpiece and a second region that is continuously adjacent to said first region but has a discontinuous portion in said first direction.

9. The laser processing method according to claim 8, wherein said second area has unevenness along said first direction.

10. The laser processing method according to any one of claims 1 to 9, wherein said processed region is formed so that a lot of unit processed regions having an approximately elliptical cone shape or an approximately wedge shape are continuously adjacent in said first direction.

11. The laser processing method according to any one of claims 1 to 10, wherein said processed region is formed by irradiating said pulse laser beam to eliminate a material of an irradiated portion.

12. The laser processing method according to any one of claims 1 to 10, wherein said processed region is formed by irradiating said pulse laser beam to generate a melting alteration region on said workpiece.

13. The laser processing method according to any one of claims 1 to 12, wherein said workpiece is any one of a sapphire substrate, a GaN substrate and an SiC substrate.

14. A method for dividing a workpiece, comprising:

a step of forming said processed region along a predetermined division planned line on said workpiece by means of the laser processing method according to any one of claims 1 to 13; and
a step of dividing said workpiece along said processed region.

15. A laser processing apparatus comprising:

a light source for emitting a pulse laser beam;
a stage that is provided to be movable relatively with respect to said light source and on which a workpiece is placed; and
a control element for controlling emission of said pulse laser beam from said light source and a movement of said stage, wherein
said pulse laser beam is emitted from said light source while said stage on which said workpiece is placed is being moved relatively with respect to said light source, and a processed region is formed on said workpiece while scanning by means of said pulse laser beam,
said control element controls said light source and an operation of said stage so that an irradiating state of said pulse laser beam from said light source is modulated at the time of scanning by means of said pulse laser beam, and said laser processing apparatus forms said processed region that has a portion continuous in a first direction and in which a state of a cross section vertical to said first direction changes in said first direction.

16. The laser processing apparatus according to claim 15, wherein said control element controls said light source and the operation of said stage so that beam spots of said pulse laser beam per unit pulse are discrete along said first direction at the time of scanning by means of said pulse laser beam, thereby to modulate an irradiated range on a surface of said workpiece.

17. The laser processing apparatus according to claim 16, wherein
said control element control said light source and the operation of said stage so that when a repetition frequency of said pulse laser beam is determined as R (kHz) and a relative moving speed of said pulse laser beam with respect to said workpiece is V (mm/sec), 10 (kHz) $\leq$ R $\leq$ 200 (kHz), and

$$30 \ (\mathrm{mm/sec}) \leq V \leq 1000 \ (\mathrm{mm/sec})$$

V/R representing an interval between beam spot centers of said pulse laser beam is
$V/R \geq 1$ ($\mu$m), and

$$W/4 \ (\mu\mathrm{m}) \leq V/R \leq W/2 \ (\mu\mathrm{m}).$$

18. The laser processing apparatus according to claim 17, wherein said control element controls said light source and the operation of said stage so that $V/R \geq 3$ ($\mu$m).

19. The laser processing apparatus according to claim 15, wherein said control element controls said light source and the operation of said stage so that an irradiation energy of said pulse laser beam is modulated at the time of scanning by means of said pulse laser beam, thereby to modulate an irradiated range on a surface of said workpiece.

20. The laser processing apparatus according to claim 15, wherein the control element controls said light source and the operation of said stage so that scanning of said pulse laser beams in a second direction and a third direction that have predetermined angles with respect to said first direction is repeated alternatively, thereby to modulate the irradiated range on a surface of said workpiece in a manner that a scanning trajectory of said pulse laser beam on said workpiece is allowed to cross a division planned line along said first direction repeatedly and alternatively.

21. The laser processing apparatus according to claim 20, wherein the control element controls said light source and the operation of said stage so that reciprocating scanning by means of said pulse laser beam is performed in a direction perpendicular to a moving direction of said stage, thereby to modulate the irradiated range on the surface of said workpiece in a manner that the scanning trajectory of said pulse laser beam crosses the division planned line along said first direction repeatedly and alternatively.

22. The laser processing apparatus according to any one of claims 15 to 21, wherein
said control element controls said light source and the operation of said stage so that the irradiating state of said pulse laser beam from said light source at the time of scanning by said pulse laser beam is modulated,
whereby the laser processing apparatus forms said processed region having a first area continuous in said first direction on a surface of said workpiece and a second area that is continuously adjacent to said first area but has a discontinuous portion in said first direction.

23. The laser processing apparatus according to claim 22, wherein said second area has unevenness along said first direction.

24. The laser processing apparatus according to any one of claims 15 to 23, wherein said control element controls said light source and the operation of said stage so that the irradiating state of said pulse laser beam from said light source at the time of scanning by said pulse laser beam is modulated, and the laser processing apparatus forms said processed region in which a lot of unit processed regions having an approximately elliptical cone shape or an approximately wedge shape are continuously adjacent in said first direction.

EP 2 316 605 A1

F I G . 2

REPETITION FREQUENCY R (kHz) = IRRADIATE AT EACH 1/R (msec)

BEAM SPOT CENTER

INTERVAL BETWEEN BEAM SPOT CENTERS
$\triangle$ =V/R ($\mu$ m)

10

STAGE MOVING SPEED V (mm/sec)

F I G . 3

F I G . 4

FIG. 5

FIG. 6

STAGE MOVING SPEED V(mm/sec)

$\Delta = \dfrac{V}{R}$

SCANNING
SPEED pR

FIG. 7

F I G . 8

F I G . 9

F I G . 1 0

F I G . 1 1

Europäisches
Patentamt

European
Patent Office

Office européen
des brevets

# EUROPEAN SEARCH REPORT

**Application Number**

EP 10 18 9249

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/182353 A1 (ZIMMERMAN SCOTT M [US] ET AL) 31 July 2008 (2008-07-31)<br><br>* abstract; figures * | 1-4,8,9, 11-18, 22,23 | INV.<br>B23K26/00<br>B23K26/40 |
| X | US 6 236 446 B1 (IZUMI YOSHIHIRO [JP] ET AL) 22 May 2001 (2001-05-22)<br><br>* figure 10b * | 1-4, 8-11, 13-18, 22-24 | |
| X | EP 0 711 627 A2 (TIP ENG GROUP INC [US]) 15 May 1996 (1996-05-15)<br>* figure 18 * | 1,5,14, 15,19 | |

| | |
|---|---|
| | TECHNICAL FIELDS SEARCHED (IPC) |
| | B23K |

The present search report has been drawn up for all claims

| Place of search | Date of completion of the search | Examiner |
|---|---|---|
| Munich | 8 February 2011 | Caubet, J |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 10 18 9249

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2011

| Patent document cited in search report | | Publication date | Patent family member(s) | | Publication date |
|---|---|---|---|---|---|
| US 2008182353 | A1 | 31-07-2008 | NONE | | |
| US 6236446 | B1 | 22-05-2001 | JP | 3498895 B2 | 23-02-2004 |
| | | | JP | 11160667 A | 18-06-1999 |
| EP 0711627 | A2 | 15-05-1996 | CA | 2145450 A1 | 01-05-1996 |
| | | | DE | 69517918 D1 | 17-08-2000 |
| | | | DE | 69517918 T2 | 18-01-2001 |
| | | | DE | 711627 T1 | 30-12-1999 |
| | | | EP | 2266746 A2 | 29-12-2010 |
| | | | JP | 8282420 A | 29-10-1996 |
| | | | JP | 2005170373 A | 30-06-2005 |
| | | | JP | 2008024294 A | 07-02-2008 |
| | | | US | 6294124 B1 | 25-09-2001 |

EPO FORM P0459

For more details about this annex : see Official Journal of the European Patent Office, No. 12/82

## REFERENCES CITED IN THE DESCRIPTION

**Patent documents cited in the description**

- JP 2004009139 A
- JP 2006062017 A
- JP 2007083309 A
- JP 2008098465 A
- WO 2006062017 A